# EUROPÄISCHE PATENTSCHRIFT

(11) **EP 0 979 755 B1**
(45) Veröffentlichungstag und Bekanntmachung des Hinweises auf die Patenterteilung: **05.03.2003**
(21) Anmeldenummer: 98121677.3
(22) Anmeldetag: 13.11.1998
(51) Int. Cl.: B60P 1/44

(54) **Hubladebühne**
Loading tailgate
Hayon élévateur

(30) Priorität: 10.08.1998 DE 29814191 U
(43) Veröffentlichungstag der Anmeldung: 16.02.2000
(73) Patentinhaber: DAUTEL GMBH, D-74211 Leingarten (DE)
(72) Erfinder: Schönberger, Klaus, 74235 Erlenbach (DE)
(74) Vertreter: Clemens, Gerhard, Dr.-Ing.

(56) Entgegenhaltungen:
- EP-A- 0 786 374
- DE-A- 4 004 036
- DE-U- 1 980 536
- FR-A- 2 760 216

## Beschreibung

### TECHNISCHES GEBIET

Die vorliegende Erfindung betrifft eine Hubladebühne, insbesondere für Fahrzeuge, mit einer Plattform, einer Tragvorrichtung mit steuerbar schwenkbaren, insbesondere auf beiden Seiten unterhalb der Plattform angeordneten, Gelenkmechanismus zum Bewegen der Plattform, wobei sich der Gelenkmechanismus an einer im wesentlichen quer zur Fahrtrichtung angeordneten Tragprofileinheit abstützt, und einer Anschlußkonstruktion zum beidseitigen Anschließen der Tragprofileinheit an am Fahrzeug vorhandene Tragelemente, insbesondere I-Fahrzeuglängsträger, wobei die Anschlußkonstruktion jeweils auf Seiten der Tragprofil-einheit eine Anschlußlasche aufweist.

### STAND DER TECHNIK

Hubladebühnen der eingangs genannten Art sind beispielsweise aus DE-A-33 45 589 bekannt. Als Tragprofileinrichtung, an der der Gelenkmechanismus angelenkt ist, wird hierbei ein im wesentlichen quer zur Fahrtrichtung, im hinteren unteren Bereich des Fahrzeugs angeordnetes Rohrprofil eingesetzt. Die Gelenkmechanismen sind auf beiden Seiten des Fahrzeugs vorhanden und die Tragprofileinrichtung ist über entsprechende Aufhängeplatten an die tragende Chassiskonstruktion des Fahrzeugs zur Abtragung der auftretenden Beanspruchung angeschweißt. Die Aufhängeplatten sind je nach Einbausituation verschieden gestaltet. Eine technische Abstimmung zwischen Hubladebühnenhersteller und Fahrzeughersteller ist erforderlich.

### DARSTELLUNG DER ERFINDUNG

Der vorliegenden Erfindung liegt, ausgehend von dem genannten Stand der Technik, die Aufgabe beziehungsweise das technische Problem zugrunde, eine Hubladebühne anzugeben, die eine Variabilität hinsichtlich der jeweiligen Einbausituation ermöglicht, eine einfache und schnelle Montage gewährleistet und mit der die bekannten Anbaufälle beziehungsweise Fahrzeugvarianten mit einer Anschlußkonstruktion abgedeckt werden können.

Die erfindungsgemäße Hubladebühne ist durch die Merkmale des Anspruchs 1 gegeben. Vorteilhafte Ausgestaltungen und Weiterbildungen sind Gegenstand der abhängigen Ansprüche.

Die erfindungsgemäße Hubladebühne zeichnet sich demgemäß dadurch aus, daß an jede Anschlußlasche zumindest eine Anschlußprofileinheit angeschlossen ist, die Anschlußprofileinheit in ihrem oberen Endbereich an eine im wesentlichen quer zur Fahrtrichtung verlaufende Quertragprofileinheit angeschlossen ist, die Quertragprofileinheit an die am Fahrzeug vorhandenen Tragelemente angeschlossen ist, der Anschluß der Anschlußlasche an die Anschlußprofileinheit und/oder der Anschlußprofileinheit an die Quertragprofileinheit höhenverstellbar ausgebildet ist und/oder der Anschluß der Anschlußprofileinheit an die Quertragprofileinheit quer zur Fahrtrichtung verstellbar ausgebildet ist.

Eine bevorzugte Ausgestaltung zeichnet sich dadurch aus, daß die Anschlußprofileinheit zumindest eine in Profillängsrichtung verlaufende erste Lochreihe aufweist. Um auf jegliche Schweißung beim Montagevorgang zu verzichten, zeichnet sich eine vorteilhafte Weiterbildung dadurch aus, daß die Quertragprofileinheit jeweils in ihrem Endbereich an einen unteren Flansch des Tragelements entweder von unten oder von oben klemmend angeschlossen, insbesondere über eine Pratze angeschraubt ist.

Eine besonders hohe Steifigkeit der Anschlußkonstruktion läßt sich dadurch erzielen, daß an jede Anschlußlasche in Fahrtrichtung beabstandet zwei Anschlußprofileinheiten angeschlossen sind.

Eine besonders montagefreundliche Ausgestaltung zeichnet sich dadurch aus, daß die Quertragprofileinheit zumindest eine zweite Lochreihe aufweist, die zum Herstellen einer Schraubverbindung bereichsweise mit der ersten Lochreiche zur Deckung bringbar ist.

Durch das Vorsehen von Lochreihen an der Anschlußprofileinheit und der Quertragprofileinheit zusammen mit der klemmenden Schraubverbindung zwischen Quertragprofileinheit und Flansch der Tragelemente ist ein hohes Maß an Variabilität der Anschlußkonstruktion sowohl in Höhenrichtung als auch in Breitenrichtung gegeben.Aufwendige Schweiß- und Bohrarbeiten bei der Montage der Hubladebühne entfallen.

Um die Variabilität weiter zu erhöhen, ist gemäß einer bevorzugten Ausgestaltung die erste Lochreihe und/oder die zweite Lochreihe als Langlochreihe ausgebildet.

Eine besonders bevorzugte Weiterbildung zeichnet sich dadurch aus, daß die Anschlußprofileinheit als L-Profil mit ersten Lochreihen in beiden Schenkeln ausgebildet ist. Das Vorsehen von L-Profilen bringt eine ausreichende Stabilität der Anschlußkonstruktion mit sich, wobei die Anschlußart variabel gestaltet werden kann.

Um die Variabilität in Breitenrichtung (quer zur Fahrtrichtung) zu erhöhen, sind in dieser Richtung mehrere zweite Lochreihen an der Quertragprofileinheit vorhanden. Die Quertragprofileinheit kann bevorzugt eine Länge aufweisen, die der maximalen Breite einer in der Praxis vorkommenden Einbausituation entspricht. Verkürzt sich die Breite in anderen Einbausituationen, so kann die Quertragprofileinheit zur Anpassung an die Einbausituation in einfacher Art und Weise lediglich abgeschnitten werden.

Eine den in der Praxis vorkommenden Einbausituationen besonders entgegenkommende vorteilhafte Ausgestaltung zeichnet sich dadurch aus, daß die Quertragprofileinheit aus zwei beabstandet zueinander angeordneten schmalen Rechteckprofilen besteht, im Anschlußbereich an den Flansch des Tragelements zumindest eine zwischen den Rechteckprofilen verlaufende Zugschraube an der Flanschaußenkante vorbeigeführt ist, wobei die Zugschraube zwischen einer Außenseite der Quertragprofileinheit und einer Pratze verspannt ist und der Flansch des Tragelements zwischen Pratze und gegenüberliegender Außenseite der Quertragprofileinheit klemmend angeordnet ist.

Eine besonders vorteilhafte Ausgestaltung, die den Einsatz von L-Profilen in verschiedenen Anschlußpositionen problemlos gewährleistet, zeichnet sich dadurch aus, daß der Abstand zwischen den zweiten Lochreihen dem abgewinkelten Abstand der beiden ersten Lochreihen in den Schenkeln des L-Profils im wesentlichen entspricht.

Eine vollverschraubte Lösung für die Anschlußkonstruktion ist gemäß einer besonders vorteilhaften Ausgestaltung dadurch gegeben, daß die Anschlußprofileinheit an die Anschlußlasche angeschraubt ist.

In einer alternativen Ausgestaltung kann auch die Anschlußprofileinheit an die Anschlußlasche angeschweißt sein.

Eine weitere alternative Ausgestaltung zeichnet sich dadurch aus, daß die Anschlußprofileinheit und die Anschlußlasche als einstückiges Bauteil sind, das heißt die Anschlußlasche bereits angeformte Kragprofile besitzt, die als Anschlußprofileinheiten ausgebildet sind.

Um die Stabilität und sichere Krafteinleitung im Laschenbereich zu gewährleisten, sind gemäß einer besonders vorteilhaften Ausgestaltung an der Anschlußlasche seitliche Umkantungsbereiche vorhanden, die im wesentlichen rechtwinklig zur Laschenebene vorhanden sind. Diese Umkantungsbereiche bilden zusammen mit Teilbereichen der Lasche einen L-förmigen Querschnitt, an dem eine L-förmige Anschlußprofileinheit problemlos angeschlossen werden kann.

Hinsichtlich einer guten Krafteinleitung in die als Tragrohr ausgebildete Tragprofileinheit zeichnet sich eine besonders vorteilhafte Ausgestaltung dadurch aus, daß der Umkantungsbereich im oberen Endbereich Schraubenlöcher aufweist und im unteren Endbereich nach innen gekantet ist, derart, daß er im wesentlichen tangential an das Tragrohr angeschlossen beziehungsweise angeschweißt ist.

Eine bevorzugte Ausgestaltung zeichnet sich dadurch aus, daß die Pratze als Rechteckbauteil ausgebildet ist und ein Ausgleichslagerelement zwischen Pratze und Quertragprofileinheit angeordnet ist oder die Pratze so im Querschnitt ausgebildet ist, daß sie direkt auf einem Flansch des Tragelements des Fahrzeugs und der Oberseite der Quertragprofileinheit aufliegt. Das Ausbilden einer einteiligen Pratze erhöht die Montagefreundlichkeit, da das Ausgleichslagerelement entfällt und somit auch nicht montiert zu werden braucht.

Eine besonders stabile und einfach zu montierende "hängende" Anschlußkonstruktion zeichnet sich dadurch aus, daß die Quertragprofileinheit unter dem Tragelement durchläuft und auf zumindest einer, insbesondere beiden Seiten des Flansches eine Pratze und eine Zugschraube vorhanden sind, mittels denen die Quertragprofileinheit klemmend an den Flansch angehängt ist.

Umgekehrt ist es auch möglich, bei gegebenen Platzverhältnissen die Quertragprofileinheit auf die Oberseite des unteren Flansches aufzulegen, wobei die Lagesicherung über die auf der Unterseite des Flansches vorhandene Pratze in Verbindung mit der Zugschraube gewährleistet wird.

Eine alternative, besonders vorteilhafte Ausgestaltung der erfindungsgemäßen Hubladebühne zeichnet sich dadurch aus, daß die Quertragprofileinheit als einstückige Profileinheit mit zumindest einer in Profillängsrichtung verlaufenden hinterschnittenen ersten Nut ausgebildet ist, in die zum Anschluß der Anschlußprofileinheit zumindest ein formschlüssiges Anschlußelement, insbesondere nutensteinförmiges Schraubelement, eingeführt ist. Zu dieser Ausgestaltung als einstückige Profileinheit zeichnet sich sich eine Weiterbildung dadurch aus, daß der Anschluß der Quertragprofileinheit an das Tragelement des Fahrzeugs über zumindest ein Umgreifungsanschlußelement erfolgt, das die Quertragprofileinheit zumindest bereichsweise formschlüssig umgreift.

Das Umgreifungsanschlußelement ist in vorteilhafter Art und Weise als U-förmige Bügelschraube ausgebildet, die die Quertragprofileinheit entlang ihrer Innenkontur umfaßt, wobei zum Erzielen eines Formschlusses die Quertragprofileinheit ebenfalls als Voll-U-Profil ausgebildet ist.

Eine weitere alternative Ausgestaltung zeichnet sich dadurch aus, daß die Quertragprofileinheit als einstückige Profileinheit mit zumindest einer in Profillängsrichtung verlaufenden hinterschnittenen zweiten Nut ausgebildet ist, in die zum Anschluß an das Tragelement des Fahrzeugs zumindest ein formschlüssiges Anschlußelement, insbesondere nutensteinförmiges Schraubelement, eingeführt ist.

Neben zweiteiligen Quertragprofileinheiten kommen somit auch einteilige Quertragprofileinheiten zum Einsatz. Insbesondere bei der Ausführungsform mit Nuten ist es vorteilhaft, die Quertragprofileinheit als Aluminium-Strangpreßprofil auszubilden.

Die Pratze oder das Klemmstück kann als Stahlbauteil oder als Gußbauteil oder als Strangpreßprofilteil ausgebildet sein.

Die Verwendung von Aluminium-Strangpreßprofilen bringt den Vorteil mit sich, daß aufwendige Pulverbeschichtungen entfallen können.

Die erfindungsgemäße Hubladebühne mit ihrer Anschlußkonstruktion vereinfacht die technische Abstimmung zwischen Ladebordwandhersteller und Fahrzeughersteller wesentlich. Bei den bekannten angeschweißten Konstruktionen ist eine Abstimmung zwingend erforderlich, um einen reibungslosen Anschluß zu gewährleisten. Mit der vorliegenden Anschlußkonstruktion ist dies praktisch nicht mehr erforderlich, da die Anschlußkonstruktion ohne Vorarbeiten des Fahrzeugherstellers am Chassis befestigt werden kann. Die erfindungsgemäße Ladebühne ermöglicht eine Anschlußkonstruktion, die nur aus einem Bausatz besteht, das heißt, daß keine Varianten für die unterschiedlichen Typen von Hubladebühnen gefertigt werden müssen. Dadurch wird in vorteilhafter Art und Weise die Teilevielfalt minimiert. Die Anschlußkonstruktion ist vorteilhaft voll schraubbar ausgelegt, so daß ein Vorlackieren der Konstruktion problemlos möglich ist. Eine wirtschaftliche Fertigung ist ebenfalls möglich, da die Konstruktion als lagerhaltiger Bausatz hergestellt werden kann. Bei der Montage der Hubladebühne am Fahrzeug entfallen sämtliche bisher erforderlichen Bohr- und Schweißarbeiten, was die Montage wesentlich vereinfacht. Auch die Montagezeit wird bei der erfindungsgemäßen Anschlußkonstruktion deutlich gegenüber den bisherigen Montagemethoden reduziert.

Mit der erfindungsgemäßen Anschlußkonstruktion ist somit eine Vorratsproduktion möglich, da die einzelnen Bauteile nicht auf die jeweilige Einbauposition bereits bei der Herstellung abgestimmt werden müssen. Zur Montage sind lediglich Vorgaben zu bestimmen, an welchen Löchern innerhalb der jeweiligen Lochreihen Schrauben eingeschraubt werden sollen. Ein weiterer großer Vorteil besteht darin, daß vor dem Einbau der Hubladebühne am Fahrzeug bereits eine Vormontage der Versandteile erfolgen kann, was den Montageaufwand deutlich reduziert. Die Anschlußkonstruktion kann quasi bis auf die Pratzen fertig vormontiert werden.

Darüber hinaus ist es von großem Vorteil, daß Korrekturen der Hubladebühne auch nach durchgeführter Montage noch möglich sind. Ein weiterer Vorteil besteht darin, daß die Ladebordwand problemlos wieder vom Fahrzeug demontierbar ist und somit insgesamt leicht auszuwechseln ist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1a: schematische Detailseitenansicht des hinteren Bereiches eines Sattelaufliegers mit Hubladebühne,
- Fig. 1b: schematische Detailansicht einer Hubladebühne im Bereich des Gelenkmechanismus in mehreren Schwenkstellungen und einer schematisch dargestellten Anschlußkonstruktion,
- Fig. 2: schematische Seitenansicht mit Teilschnitt des Tragrohres einer ersten Ausführungsvariante einer geschraubten Anschlußkonstruktion (Schnittführung I-I gemäß Fig. 3),
- Fig. 3: schematische Detailrückansicht der Anschlußkonstruktion gemäß Fig. 2,
- Fig. 4: schematischer Schnitt durch die Anschlußkonstruktion gemäß Fig. 2 entlang der Schnittführung II-II,
- Fig. 5: schematische Detailperspektive der Anschlußkonstruktion gemäß Fig. 2 in Explosionsdarstellung,
- Fig. 6: schematische Detailrückansicht einer zweiten Ausführungsvariante einer Anschlußkonstruktion,
- Fig. 7: schematische Seitenansicht einer dritten Ausführungsvariante einer Anschlußkonstruktion,
- Fig. 8: schematische Detailrückansicht der Anschlußkonstruktion gemäß Fig. 7,
- Fig. 9: schematische Detailrückansicht einer vierten Ausführungsvariante einer Anschlußkonstruktion,
- Fig. 10: schematische Seitenansicht des Anschlußbereiches einer Quertragprofileinheit an Tragelement in einer fünften Ausführungsvariante, bei der die Quertragprofileinheit als einstückiges Profil mit Nuten ausgebildet ist,
- Fig. 11: schematischer Querschnitt durch die Quertragprofileinheit gemäß Fig. 10,
- Fig. 12: schematische Darstellung der Anschlußkonstruktion gemäß Fig. 10 entlang Schnittführung II - II,
- Fig. 13: schematische Darstellung des Anschlusses der Quertragprofileinheit gemäß Fig. 11 an eine Anschlußprofileinheit und
- Fig. 14: schematische Detaildarstellung einer sechsten Ausführungsvariante einer Anschlußkonstruktion mit einstückiger Quertragprofileinheit mit Nuten im Anschlußbereich an ein Tragelement.

### WEGE ZUM AUSFÜHREN DER ERFINDUNG

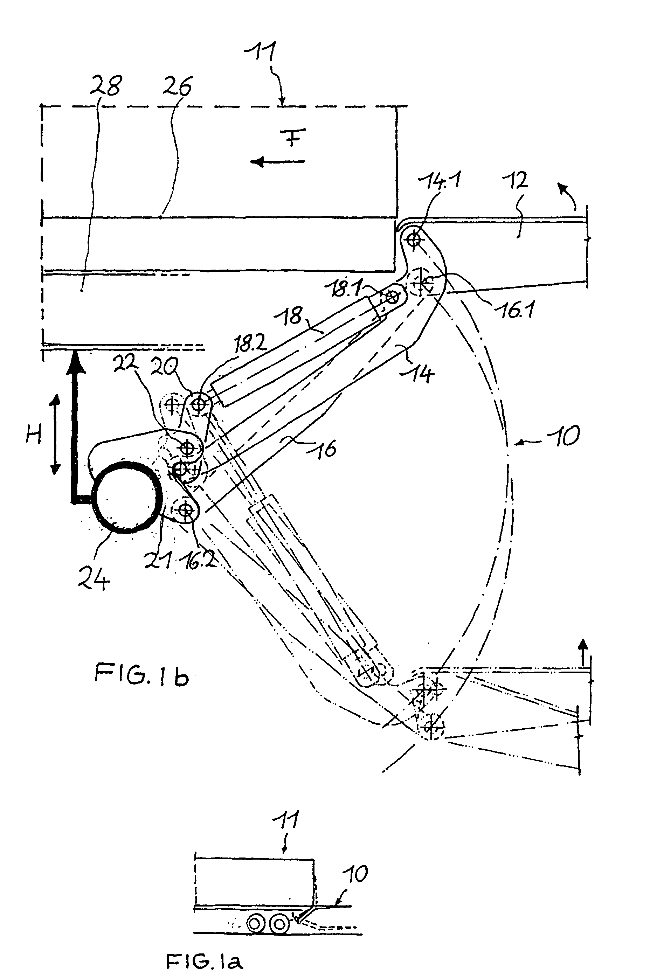

In Fig. 1b ist schematisch eine Hubladebühne 10 dargestellt, die über eine in Fig. 1b schematisch als Pfeil dargestellte Anschlußkonstruktion 30 an den Fahrzeuglängsträgern 28 eines Fahrzeugs 11 angeschlossen ist. Die Hubladebühne 10 besitzt eine Plattform 12, an der ein parallelogrammgeführter Gelenkmechanismus mit einem oberen Gelenkarm 14 und einem unteren Gelenkarm 16 angelenkt ist. Ein Betätigungsarm 18 ist als Zug-Kolben-Zylinder-Aggregat ausgebildet und im vorderen Bereich eines als Hubschwinge 14 ausgebildeten oberen Gelenkarms in einem oberen Gelenkpunkt 18.1 angelenkt. Das andere Ende ist über einen Gelenkpunkt 18.2 an einer drehbaren Lasche 20 angelenkt. Die Hubschwinge 14 besitzt in ihrem vorderen Endbereich eine Kröpfung und bildet dort einen Anlenkpunkt 14.1 für die Plattform 12. Ein unterer Gelenkarm 16 ist ebenfalls als Kolben-Zylinder-Aggregat ausgebildet und über das Gelenk 16.2 an die an einer Tragprofileinheit 24 befestigten Lasche 21 unterseitig angeschlossen. Oberseitig ist der Gelenkarm 16 über einen Gelenkpunkt 16.1 an die Plattform 12 angeschlossen. Das Kolben-Zylinder-Aggregat 16 dient der Neigungsverstellung der Plattform 12. Die unterschiedlichen Stellungen der Plattform 12 sind in Fig. 1b strichpunktiert dargestellt. Der parallelogrammartig geführte Gelenkmechanismus ist über die Laschen 20, 21 an die Traghohlprofileinheit 24, die als Tragrohr ausgebildet ist, angeschlossen. Die Traghohlprofileinheit 24 selbst ist wiederum über eine in Fig. 1 schematisch als Pfeil dargestellte Anschlußkonstruktion 30 an dem Chassis des Fahrzeugs 11 befestigt.

Generell ist die Traghohlprofileinheit höhenverstellbar an das Tragelement anschließbar, was durch den Doppelpfeil H in Fig. 1 symbolisch dargestellt ist.

Fig. 1a zeigt schematisch ein Fahrzeug im hinteren Bereich, wobei die Hubladebühne im unteren Bereich angeordnet ist. Eine ausführliche Darstellung des Gelenkmechanismus dieser Hubladebühne ist beispielsweise in der EP 0 799 742 offenbart. Die Fahrtrichtung ist in den Figuren mit einem Pfeil F dargestellt.

Im übrigen sind die Steuerungseinheiten, Steuerleitungen und sonstigen Bauelemente zum Betreiben der hydraulischen Kolben-Zylinder-Aggregate in den Fig. nicht dargestellt. Der Aufbau einer Steuerung kann beispielsweise aus der deutschen Patentschrift DE-A-33 45 589 entnommen werden.

Im folgenden geht es nunmehr um die konstruktive Ausbildung der Anschlußkonstruktion 30.

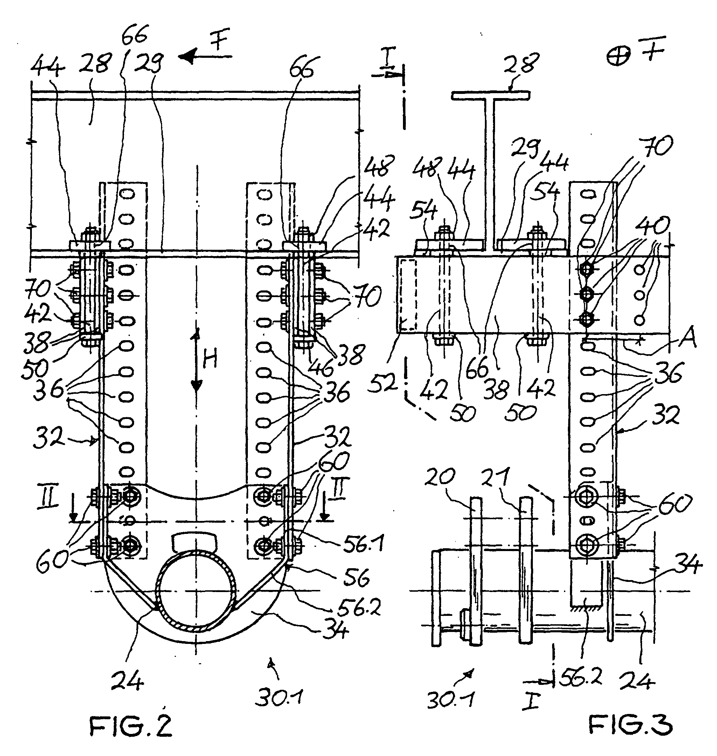

Die Tragprofileinheit 24, an der auf beiden Seiten im Endbereich über die Laschen 20 und 21 der jeweilige Gelenkmechanismus angeschlossen ist, ist als Rohrhohlprofil ausgebildet. Die Tragprofileinheit 24 wird über eine Anschlußkonstruktion 30.1 gemäß Fig. 2 bis 5 an Fahrzeuglängsträger 28 angeschlossen, die als I-Profilträger ausgebildet sind.

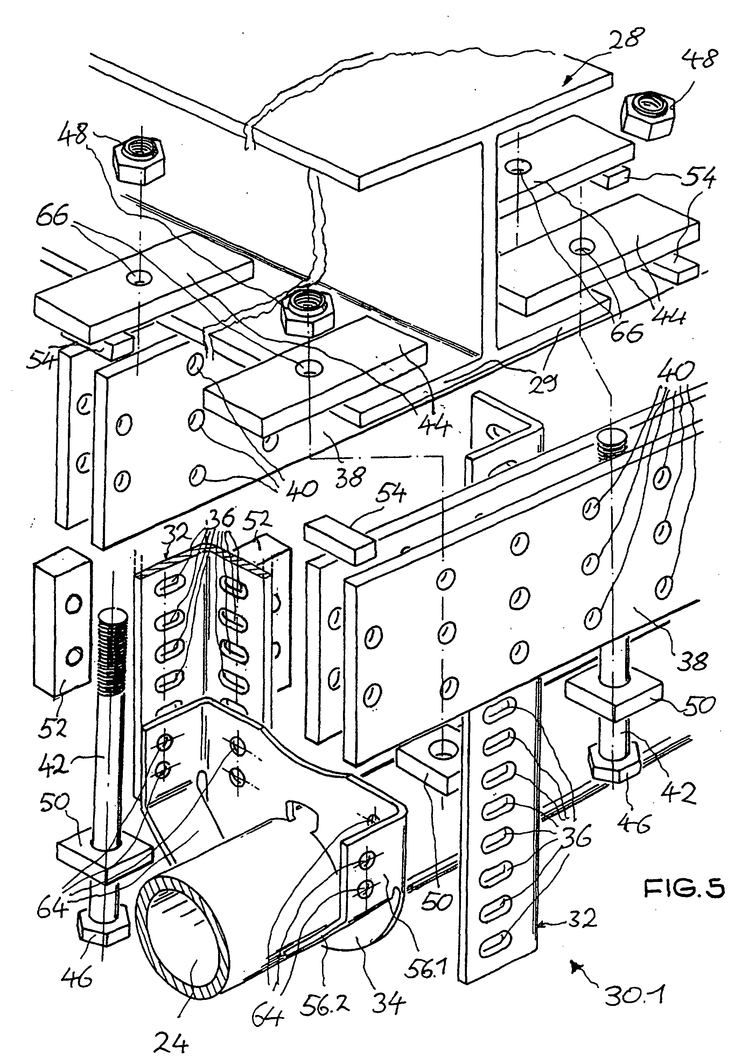

Auf die Tragprofileinheit 24 aufgeschoben und mit dieser verschweißt ist eine Anschlußlasche 34 vorhanden, deren Ebene in Fahrtrichtung F liegt und die die Tragprofileinheit 24 vollständig umgibt. Sie erstreckt sich auch oberhalb der Tragprofileinheit 24 und besitzt auf beiden Seiten eine Umkantung 56, die im wesentlichen rechtwinklig zur Anschlußlaschenebene vorhanden ist. Die Umkantung 56 besteht aus einem oberen, im wesentlichen vertikal angeordneten oberen Bereich 56.1 und einen daran angeformten, nach innen gekanteten schrägen unteren Bereich 56.2, der praktisch tangential auf die Tragprofileinheit 24 stößt und mit dieser verschweißt ist. Im oberen Bereich 56.1 und in dem anschließend benachbarten Bereich der Anschlußlaschenebene sind Schraubenlöcher 64 (Fig. 5) zum Anschluß einer Anschlußprofileinheit 32 auf beiden Seiten der Anschlußlasche 34 vorhanden. Die Anschlußprofileinheiten 32 sind als L-Profile ausgebildet, die in ihren beiden Schenkeln jeweils eine erste Langlochreihe 36 aufweisen. Die Ausbildung der Anschlußlasche 34 und deren benachbarter Bereich ist dabei so gewählt, daß von außen her die L-förmige Anschlußprofileinheit 32 über eine Schraubverbindung 60 angeschlossen werden kann. Dabei werden beide Schenkel der Anschlußprofileinheit 32 mit der Anschlußlasche 34 in der Summe mit vier Schrauben verschraubt. Die im wesentlichen vertikal nach oben verlaufenden Anschlußprofileinheiten 32 ermöglichen durch das Vorhandensein der ersten Lochreihe 36 einen Anschluß einer Quertragprofileinheit 38 in variabler Höhenposition.

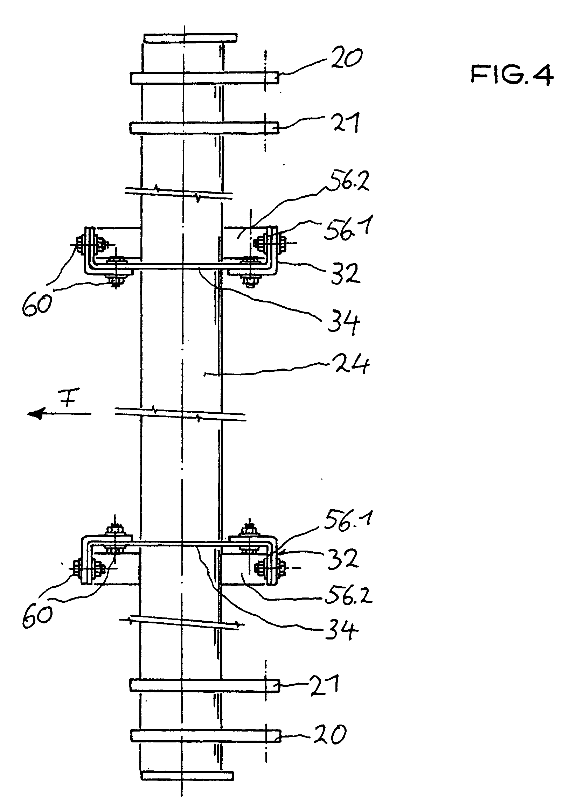

Der in Fig. 3 dem Betrachter zugewandte Schenkel der Anschlußprofileinheit 32 ist über eine Schraubverbindung 70 mit der Quertragprofileinheit 38 verbunden. Hierzu weist die Quertragprofileinheit 38 eine zweite Lochreihe 40 auf. Um die Variabilität der Anschlußmöglichkeiten der Quertragprofileinheit 38 zu erhöhen, ist in einem vorgebbaren Abstand A eine weitere zweite Lochreihe 40 vorhanden. Es können noch weitere zweite Lochreihen 40 vorhanden sein (Fig. 5).

Die Quertragprofileinheit 38 besteht aus zwei beabstandet zueinander schmalen hohen Rechteckquerschnitten, wobei der Abstand der beiden Rechteckquerschnitte durch verschraubte Zwischenelemente 52 gewährleistet wird. An jede Quertragprofileinheit 38 ist im Lagerbereich jeweils eine Anschlußprofileinheit 32 angeschlossen. Die Quertragprofileinheit 38 verläuft unterhalb des unteren Flansches 29 des Fahrzeuglängsträgers 28 und ist an diesen angehängt, ohne daß Bohrungen am unteren Flansch 29 vorgenommen werden müssen. Hierzu ist eine Zugschraube 42 und eine Pratze 44 mit einem Ausgleichslagerelement 54 vorhanden. Die Zugschraube 42 ist im Zwischenraum zwischen den beiden Rechteckquerschnitten der Quertragprofileinheit 38 angeordnet. Ihr Kopf 46 stützt sich auf der Unterseite der beiden Querschnittsprofile der Quertragprofileinheit 38 über eine im wesentlichen quadratische Lagerscheibe 50 an der Quertragprofileinheit 38 ab. Die Lagerscheibe 50 kann auch mit runder Außenkontur ausgebildet sein. Die Zugschraube 42 ist nach oben heraus über die Außenkante des Flansches 29 hinaus durch eine Ausnehmung 66 einer Pratze 44 geführt und stützt sich wiederum über ihre Mutter 48 auf der Pratze 44 ab, die sich wiederum auf der Oberseite des Flansches 29 und dem Ausgleichslagerelement 54 abstützt, das zwischen der Pratze 44 und der Oberseite der Quertragprofileinheit 38 auf der dem Flansch 29 gegenüberliegenden Seite der Zugschraube 42 angeordnet ist.

In einer nicht dargestellten Version entfallen die Muttern 48. Dafür besitzen die Ausnehmungen 66 ein Gewinde, in das die Schrauben 42 eingeschraubt werden. Dies erhöht die Montagefreundlichkeit.

Die Pratze 44, Zugschraube 42 und das Ausgleichslagerelement 54 ist auf beiden Seiten des Flansches jeweils vorhanden.

Der Kraftverlauf ist im folgenden kurz dargestellt. Eine auf die Tragprofileinheit 24 wirkende, im Beispielsfall senkrecht nach unten wirkende Kraft wird zunächst auf die Anschlußlasche 34 übertragen. Die Anschlußlasche 34 gibt über den Schraubanschluß 60 diese Kraft an die jeweilige Anschlußprofileinheit 32 ab. Die Anschlußprofileinheit 32 bringt die Kraft über die Schraubverbindung 70 in die Quertragprofileinheit 38. Die Auflager der Quertragprofileinheit 38 bilden die Lagerscheiben 50 der Zugschraube 42. Die vertikal nach unten wirkende Kraft wird nun mittels der Zugschraube 42 auf die Pratze 44 übertragen, welche die Kraft auf den Flansch 29 überträgt.

Im Falle einer nach oben wirkenden Kraft entfällt die Wirkung der Zugschrauben und die Kraft wird direkt von der Quertragprofileinheit 38 an den Flansch 29 und damit an den Fahrzeuglängsträger 28 auf Druck übertragen.

Dadurch, daß die Anschlußprofileinheiten 32 in Fahrtrichtung F beabstandet an der Anschlußlasche 34 vorhanden sind, lassen sich problemlos auch hohe Torsionsbeanspruchungen der Tragprofileinheit 24 abtragen.

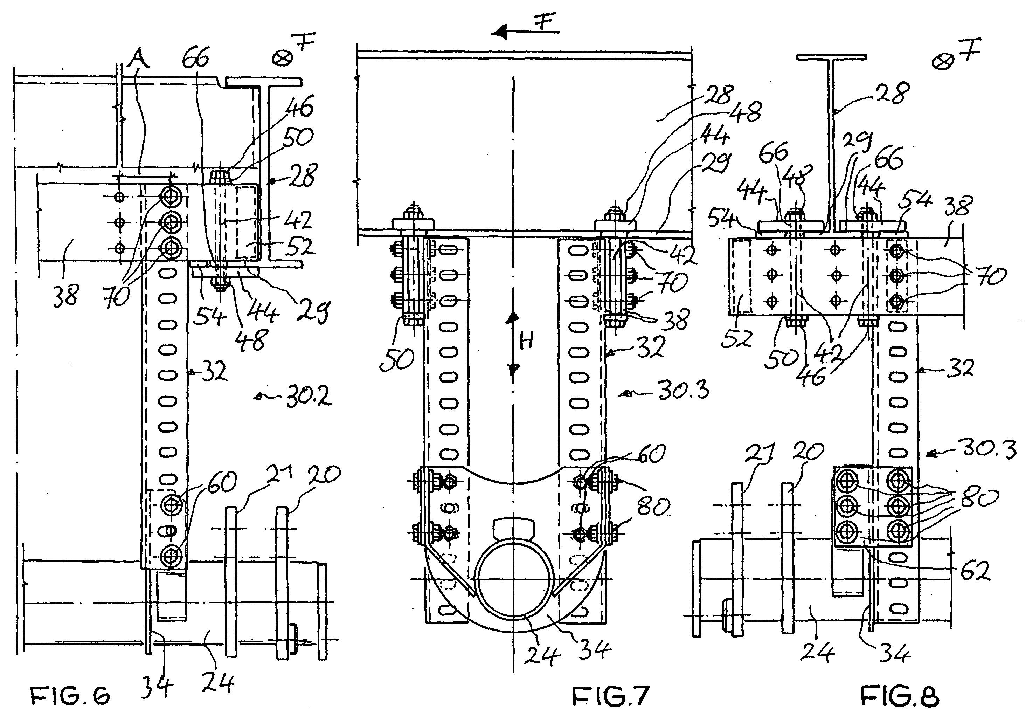

Die in Fig. 6 dargestellte zweite Ausführungsvariante einer Anschlußkonstruktion 30.2 besitzt einen prinzipiell ähnlichen Aufbau wie der oben beschriebene, jedoch ist hier die Quertragprofileinheit 38 nicht von unten an den Flansch 29 angehängt, sondern auf der Oberseite des Flansches 29 aufgelegt. Auch hier erfolgt eine Verspannung über eine Zugschraube 42 und eine Pratze 44 mit Ausgleichslagerelement 54, wobei die Pratze unterseitig am Flansch 29 anliegt. Gleiche Bauteile tragen dasselbe Bezugszeichen und werden nicht nochmals erläutert.

Die in den Fig. 7 und 8 dargestellte dritte Ausführungsvariante einer Anschlußkonstruktion 30.3 ähnelt der Anschlußkonstruktion gemäß den Fig. 2 und 3. Auch hier ist die Quertragprofileinheit 38 von unten her an den Flansch 29 des Fahrzeuglängsträgers 28 angehängt. Jedoch ist die Anschlußprofileinheit 38 weiter nach unten verschoben, beispielsweise für solche Einbaufälle, in denen oberhalb der Quertragprofileinheit 38 kein Einbauraum zur Verfügung steht. Weiterhin besteht ein Unterschied zu der Anschlußkonstruktion gemäß Fig. 2 und 3 darin, daß nicht beide Schenkel der Anschlußprofileinheit 32 direkt an der Anschlußlasche 34 angeschlossen sind, sondern der in Fig. 8 dem Betrachter zugewandte Schenkel über eine separate Lasche 62 an den oberen Bereich 56.1 der Umkantung 56 der Anschlußlasche 34 über eine Schraubverbindung 80 angeschlossen ist. Praktisch ist in dieser Ausführungsvariante die L-förmige Anschlußprofileinheit 32 im Vergleich zu Fig. 3 quasi nach innen geklappt.

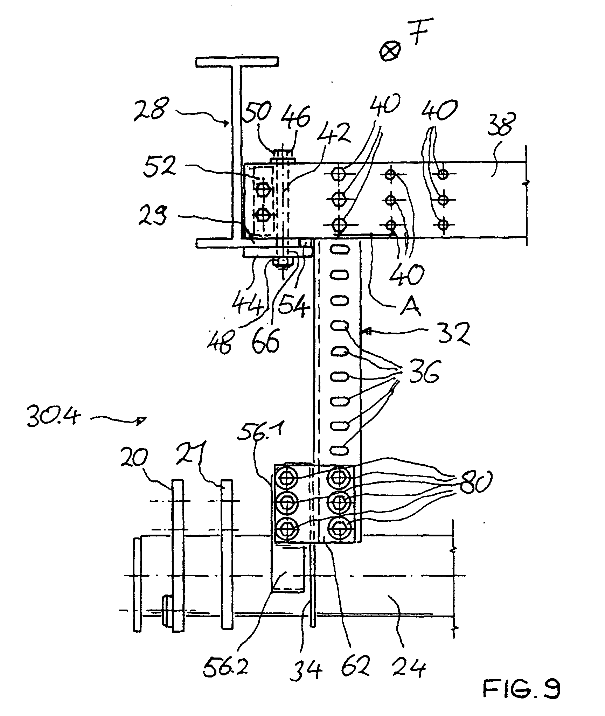

Eine vierte Ausführungsvariante einer Anschlußkonstruktion 30.4 gemäß Fig. 9 ähnelt der Anschlußsituation gemäß Fig. 6 im oberen Bereich, in dem nämlich auch hier die Quertragprofileinheit 38 auf die Oberseite des Flansches 29 aufgelegt ist und über die Zugschraubenverbindung mit der Pratze 44 eine zusätzlich klemmende Verbindung geschaffen wird. Im unteren Bereich ist die Anschlußkonstruktion 30.4 so aufgebaut wie die Anschlußkonstruktion 30.3 gemäß den Fig. 7 und 8. Auch hier kommt eine Lasche 62 mit Schraubenverbindung 80 zum Einsatz, da auch hier die L-förmige Anschlußprofileinheit 32 nach innen geklappt angeschlossen ist.

Es können auch andere Anschlußprofileinheiten als die dargestellten L-förmigen Anschlußprofileinheiten 32 eingesetzt werden.

Die Pratze kann als Stahlbauteil ausgebildet sein, das aus entsprechenden Stahlplatten herausgeschnitten wird. Im Rahmen einer wirtschaftlichen Fertigung, insbesondere bei einer Herstellung der Pratzen in großer Stückzahl, ist es vorteilhaft, die Pratze als Gußteil auszubilden. Auch eine Ausbildung als Aluminium-Strangpreßprofil, das entsprechend abgelängt wird, ist möglich.

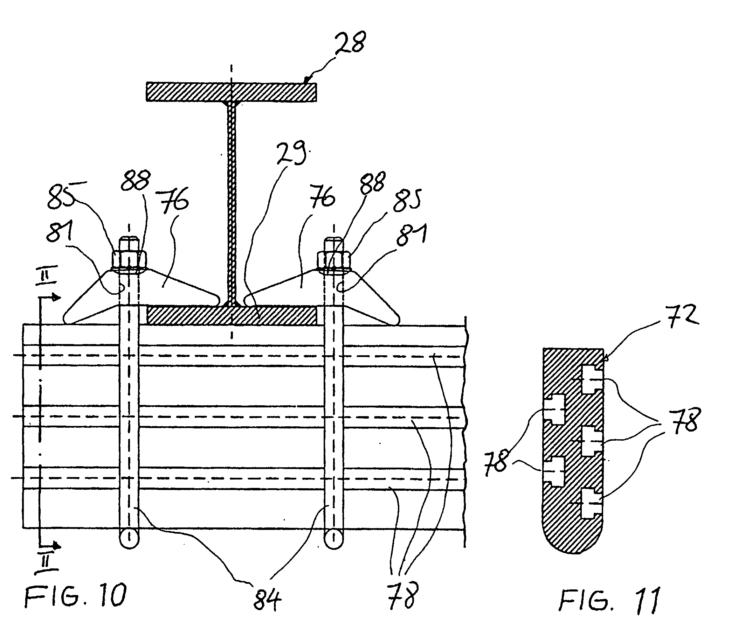

In den Figuren 10 bis 13 ist eine fünfte Ausführungsvariante schematisch dargestellt. Die Anschlußprofileinheit 32 ist dasselbe Winkelprofil wie bereits oben beschrieben. Es kommt eine Quertragprofileinheit 72 zum Einsatz, die einstückig ausgebildet ist und im Querschnitt die Außenkontur eines Voll-U-Profils besitzt. An der rechten seitlichen Außenwandung sind übereinander drei hinterschnittene Nute 78 eingeformt. Auf der gegenüberliegenden Seite sind versetzt zu diesen drei Nuten 78 weitere zwei Nuten 78 eingeformt.

Die Quertragprofileinheit 72 weist umfangsmäßig ein Voll-U-Profil auf, dessen Oberseite im Anschlußfall an den Flansch 29 des Tragelements 28 anliegt.

Der Anschluß der Quertragprofileinheit 72 an den Flansch 29 des Tragelements 28 erfolgt über eine Umfangsanschlußeinheit 84, die als Bügelschraube ausgebildet ist, in Verbindung mit einer Pratze 76, die so ausgebildet ist, daß sie oberseitig auf dem Flansch 29 und oberseitig auf der Oberseite der Quertragprofileinheit 72 anliegt. Die Bügelschraube 84 besitzt eine Innenkontur, die im wesentlichen der U-förmigen Außenkontur der Quertragprofileinheit 72 entspricht, so daß diese formschlüssig in der Bügelschraube 84 angeordnet werden kann. Die Verspannung der Quertragprofileinheit 72 an dem Flansch 29 des Tragelements 28 erfolgt dann über anzuziehende Muttern 85. Aufgrund der konvexen Umfangskontur der Pratze 76 im Bereich der Ausnehmung 81, durch die hindurch die Bügelschraube 84 durch die Pratze 76 gesteckt wird, ist eine Unterlegscheibe 88 vorhanden, die eine entsprechend konkave Kontur zur Pratze 76 hin aufweist.

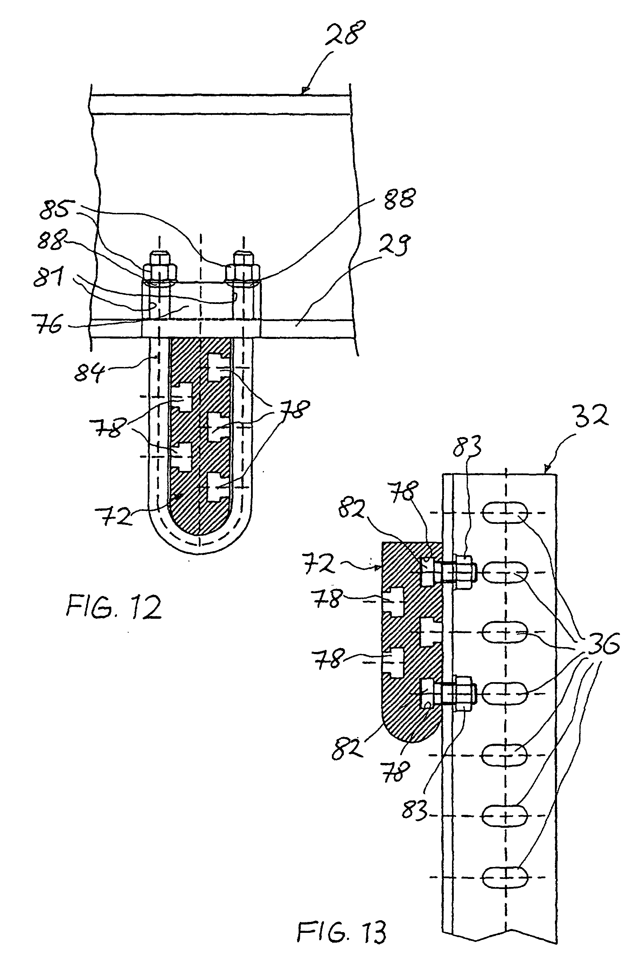

Der Anschluß der Quertragprofileinheit 72 an die Anschlußprofileinheit 32 ist in Fig. 13 schematisch dargestellt. Es werden Anschlußelemente 82 in die ersten Nuten 78 der Quertragprofileinheit 72 eingeführt, die als Schraubelemente mit einem nutensteinförmigen Kopf ausgebildet sind. Mittels Muttern 83 werden diese Anschlußelemente 82 dann an die Anschlußprofileinheit 32 angeschlossen.

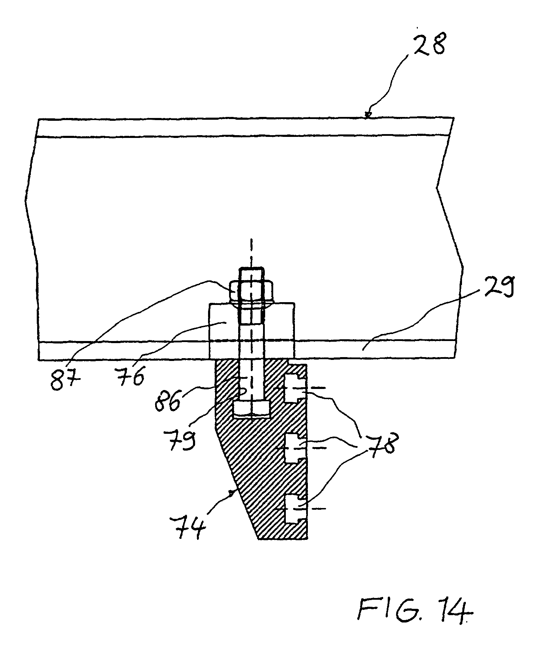

Eine alternative Ausgestaltung einer Quertragprofileinheit 74 ist in Fig. 14 dargestellt. Die Quertragprofileinheit 74 ist ebenfalls als einstückiges stranggepreßtes, bevorzugt Aluminium-Profil, ausgebildet, das lediglich in seiner in Fig. 14 rechtsseitig angeordneter Außenwandung drei übereinander angeordnete hinterschnittene Nuten 78 zum Anschluß einer Anschlußprofileinheit 32 aufweist. Im Gegensatz zu dem Ausführungsbeispiel gemäß den Figuren 10 bis 13 erfolgt der Anschluß an den Flansch 29 des Tragelements 28 nicht über eine Bügelschraube sondern über ein Anschlußelement, das als Schraubelement 86 mit einem nutensteinförmigen Anschlußbereich ausgebildet ist, wobei dieser Anschlußbereich des Schraubelements 86 in eine an der Quertragprofileinheit 74 oberseitig eingeformte zweite Nut 79 mit entsprechender Hinterschneidung eingeführt werden kann. Die Verspannung mit dem Flansch 29 des Tragelements 28 erfolgt wie bereits beschrieben über eine Mutter 87 unter Zwischenschaltung der Pratze 76.

Die erfindungsgemäße Anschlußkonstruktion ermöglicht eine schnelle und einfache Montage an Fahrzeugen, wobei vor dem Einbau am Fahrzeug zunächst in einfacher Art und Weise eine Vormontage der einzelnen Anschlußbauteile erfolgen kann. Zum gesamten Montagevorgang ist kein Bohren und Schweißen erforderlich, so daß eine Vorlackierung problemlos umgesetzt werden kann, ohne daß nach der Montage weitere Lackierungsarbeiten vorgenommen werden müssen. Die Montage am Fahrzeug selbst erfolgt durch einfaches Anklemmen der Quertragprofileinheiten an die Fahrzeuglängsträger. Aufgrund der Variabilität hinsichtlich des Anschlußbildes können praktisch alle bekannten Anbaufälle beziehungsweise Fahrzeugvarianten abgedeckt werden. Die für die Anschlußkonstruktion benötigten Teile können auf ein Minimum reduziert werden, ohne daß dabei die Variabilität hinsichtlich der jeweiligen Einbausituation verloren geht.

## Patentansprüche

1. Hubladebühne (10) für Fahrzeuge (11), mit
- einer Plattform (12),
- einer Tragvorrichtung (14, 16, 18, 24) mit einem steuerbar schwenkbaren, insbesondere auf beiden Seiten unterhalb der Plattform (12) angeordneten, Gelenkmechanismuszum Bewegen der Plattform (12), wobei sich der Gelenkmechanismus an einer im wesentlichen quer zur Fahrtrichtung (F) angeordneten Tragprofileinheit (24) abstützt, und
- einer Anschlußkonstruktion (30) zum beidseitigen Anschließen der Tragprofileinheit (24) an am Fahrzeug (11) vorhandene Tragelemente (28), insbesondere I-Fahrzeuglängsträger (28), wobei die Anschlußkonstruktion (30) jeweils auf Seiten der Tragprofileinheit (24) eine Anschlußlasche (34) aufweist,
**dadurch gekennzeichnet, daß**
- an jede Anschlußlasche (34) zumindest eine Anschlußprofileinheit (32) angeschlossen ist,
- die Anschlußprofileinheit (32) in ihrem oberen Endbereich an eine im wesentlichen quer zur Fahrtrichtung (F) verlaufende Quertragprofileinheit (38; 72; 74) angeschlossen ist,
- die Quertragprofileinheit (38; 72; 74) an die am Fahrzeug (11) vorhandenen Tragelemente (28) angeschlossen ist,
- der Anschluß der Anschlußlasche (34) an die Anschlußprofileinheit (32) und/oder der Anschlußprofileinheit (32) an die Quertragprofileinheit (38; 72; 74) höhenverstellbar (H) ausgebildet ist
- und/oder der Anschluß der Anschlußprofileinheit (32) an die Quertragprofileinheit (38; 72; 74) quer zur Fahrtrichtung (F) verstellbar ausgebildet ist.

2. Hubladebühne nach Anspruch 1,
**dadurch gekennzeichnet, daß**
- die Anschlußprofileinheit (32) zumindest eine in Profillängsrichtung verlaufende erste Lochreihe (36) aufweist.

3. Hubladebühne nach Anspruch 1 und/oder 2,
**dadurch gekennzeichnet, daß**
- die Quertragprofileinheit (38) jeweils in ihrem Endbereich an einen unteren Flansch (29) des Tragelements (28) entweder von unten oder von oben klemmend angeschlossen, insbesondere über eine Pratze (44; 76) angeschraubt ist.

4. Hubladebühne nach einem oder mehreren der vorstehenden Ansprüche,
**dadurch gekennzeichnet, daß**
- an jede Anschlußlasche (34) in Fahrtrichtung (F) beabstandet zwei Anschlußprofileinheiten (32) angeschlossen sind.

5. Hubladebühne nach einem oder mehreren der vorstehenden Ansprüche,
**dadurch gekennzeichnet, daß**
- die Quertragprofileinheit (38) zumindest eine zweite Lochreihe (40) aufweist, die zum Herstellen einer Schraubverbindung bereichsweise mit der ersten Lochreihe (36) zur Deckung bringbar ist.

6. Hubladebühne nach Anspruch 2 oder 5,
**dadurch gekennzeichnet, daß**
- die erste Lochreihe (36) und/oder die zweite Lochreihe (40) als Langlochreihe ausgebildet ist/sind.

7. Hubladebühne nach einem oder mehreren der vorstehenden Ansprüche,
**dadurch gekennzeichnet, daß**
- die Anschlußprofileinheit (32) als L-Profil mit ersten Lochreihen (36) in beiden Schenkeln ausgebildet ist.

8. Hubladebühne nach einem oder mehreren der vorstehenden Ansprüche,
**dadurch gekennzeichnet, daß**
- die Quertragprofileinheit (38) quer zur Fahrtrichtung (F) zumindest zwei zweite Lochreihen (40) aufweist.

9. Hubladebühne nach Anspruch 7 und 8,
**dadurch gekennzeichnet, daß**
- der Abstand (A) zwischen den zweiten Lochreihen (40) der Quertragprofileinheit (38) dem abgewinkelten Abstand der beiden ersten Lochreihen (36) in den Schenkeln des L-Profils im wesentlichen entspricht.

10. Hubladebühne nach einem oder mehreren der vorstehenden Ansprüche,
**dadurch gekennzeichnet, daß**
- die Quertragprofileinheit (38) aus zwei beabstandet zueinander angeordneten schmalen Rechteckprofilen besteht, im Anschlußbereich am unteren Flansch (29) des Tragelements (28) zumindest eine zwischen den Rechteckprofilen verlaufende Zugschraube (42) an der Flanschaußenkante vorbeigeführt ist, wobei die Zugschraube (42) zwischen einer Außenseite der Quertragprofileinheit (38) und einer Pratze (44) verspannt ist und der Flansch (29) zwischen Pratze (44) und gegenüberliegender Außenseite der Quertragprofileinheit (38) klemmend angeschlossen ist.

11. Hubladebühne nach einem oder mehreren der Ansprüche 1 bis 10,
**dadurch gekennzeichnet, daß**
- die Anschlußprofileinheit und die Anschlußlasche als einstückiges Bauteil ausgebildet sind, das heißt, daß die Anschlußlasche angeformte, als Anschlußprofileinheiten dienende, Kragprofile aufweist.

12. Hubladebühne nach einem oder mehreren der vorstehenden Ansprüche,
**dadurch gekennzeichnet, daß**
- die Anschlußlasche (34) seitliche Umkantungsbereiche (56) besitzt, die im wesentlichen rechtwinklig zur Laschenebene vorhanden sind.

13. Hubladebühne nach Anspruch 1 und/oder 10,
**dadurch gekennzeichnet, daß**
- die Pratze (44) als Rechteckbauteil ausgebildet ist und ein Ausgleichslagerelement (54) zwischen Pratze (44) und Quertragprofileinheit (38) angeordnet ist oder die Pratze (76) so im Querschnitt ausgebildet ist, daß sie direkt auf einem Flansch (29) des Tragelements (28) des Fahrzeugs (11) und der Oberseite der Quertragprofileinheit (72; 74) aufliegt.

14. Hubladebühne nach Anspruch 10 und/oder 13,
**dadurch gekennzeichnet, daß**
- die Quertragprofileinheit (38) unter dem Tragelement (28) durchläuft und zumindest auf einer Seite, insbesondere auf beiden Seiten des Flansches (29) eine Pratze (44) und eine Zugschraube (42) vorhanden ist, mittels derer die Quertragprofileinheit (38) klemmend angehängt ist.

15. Hubladebühne nach Anspruch 10 und/oder 13,
**dadurch gekennzeichnet, daß**
- die Unterseite der Quertragprofileinheit (38) auf der Oberseite des Flansches (29) gelagert ist und die Pratze (44) auf der Unterseite des Flansches (29) angeordnet ist.

16. Hubladebühne nach einem oder mehreren der Ansprüche 10 bis 15,
**dadurch gekennzeichnet, daß**
- die Pratze als Stahlbauteil oder Gußbauteil oder Strangpreßprofilteil ausgebildet ist.

17. Hubladebühne nach einem oder mehreren der Ansprüche 1 bis 4,
**dadurch gekennzeichnet, daß**
- die Quertragprofileinheit (72; 74) als einstückige Profileinheit mit zumindest einer in Profillängsrichtung verlaufenden hinterschnittenen ersten Nut (78) ausgebildet ist, in die zum Anschluß der Anschlußprofileinheit (32) zumindest ein formschlüssiges Anschlußelement (82), insbesondere nutensteinförmiges Schraubelement, eingeführt ist.

18. Hubladebühne nach Anspruch 17,
**dadurch gekennzeichnet, daß**
- der Anschluß der Quertragprofileinheit (72) an das Tragelement (28) des Fahrzeugs (11) über zumindest ein Umgreifungsanschlußelement (84) erfolgt, das die Quertragprofileinheit (72) zumindest bereichsweise formschlüssig umgreift.

19. Hubladebühne nach Anspruch 18,
**dadurch gekennzeichnet, daß**
- das Umgreifungsanschlußelement (84) als U-förmige Bügelschraube und die Quertragprofileinheit (72) als Voll-U-Profil ausgebildet sind.

20. Hubladebühne nach einem oder mehreren der Ansprüche 1 bis 4,
**dadurch gekennzeichnet, daß**
- die Quertragprofileinheit (74) als einstückige Profileinheit mit zumindest einer in Profillängsrichtung verlaufenden hinterschnittenen zweiten Nut (79) ausgebildet ist, in die zum Anschluß an das Tragelement (28) des Fahrzeugs (11) zumindest ein formschlüssiges Anschlußelement (86), insbesondere nutensteinförmiges Schraubelement, eingeführt ist.

## Claims

1. Loading tailgate (10) for vehicles (11),
- having a platform (12),
- having a supporting apparatus (14, 16, 18, 24) with an articulation mechanism which can be pivoted in a controllable manner, is arranged in particular on both sides beneath the platform (12) and is intended for moving the platform (12), the articulation mechanism being supported on a supporting-profile unit (24) arranged essentially transversely to the direction of travel (F), and
- having a connection structure (30) for connecting the supporting-profile unit (24), on both sides, to supporting elements (28) provided on the vehicle (11), in particular vehicle chassis rails (28), the connection structure (30) having a connection link plate (34) on the supporting-profile unit (24) in each case,
**characterized in that**
- at least one connection-profile unit (32) is connected to each connection link plate (34),
- the connection-profile unit (32), in its top end region, is connected to a transverse supporting-profile unit (38; 72; 74) running essentially transversely to the direction of travel (F),
- the transverse supporting-profile unit (38; 72; 74) is connected to the supporting elements (28) provided on the vehicle (11),
- the connection of the connection link plate (34) to the connection-profile unit (32) and/or of the connection-profile unit (32) to the transverse supporting-profile unit (38; 72; 74) is of vertically adjustable design (H),
- and/or the connection of the connection-profile unit (32) to the transverse supporting-profile unit (38; 72; 74) is designed such that it can be adjusted transversely to the direction of travel (F).

2. Loading tailgate according to Claim 1, **characterized in that**
- the connection-profile unit (32) has at least one first row of holes (36) running in the longitudinal direction of the profile.

3. Loading tailgate according to Claim 1 and/or 2, **characterized in that**
- the transverse supporting-profile unit (38), in its end region in each case, is connected with clamping action either from beneath or from above, in particular bolted via a clamp (44; 76), to a bottom flange (29) of the supporting element (28).

4. Loading tailgate according to one or more of the preceding claims, **characterized in that**
- two connection-profile units (32) are connected to each connection link plate (34) at a distance apart from one another in the direction of travel (F).

5. Loading tailgate according to one or more of the preceding claims, **characterized in that**
- the transverse supporting-profile unit (38) has at least one second row of holes (40), which can be made to coincide with the first row of holes (36) in certain regions in order to produce a bolt connection.

6. Loading tailgate according to Claim 2 or 5, **characterized in that**
- the first row of holes (36) and/or the second row of holes (40) are/is designed as a row of slots.

7. Loading tailgate according to one or more of the preceding claims, **characterized in that**
- the connection-profile unit (32) is designed as an L-profile with first rows of holes (36) in both legs.

8. Loading tailgate according to one or more of the preceding claims, **characterized in that**
- the transverse supporting-profile unit (38) has at least two second rows of holes (40) in the direction transverse to the direction of travel (F).

9. Loading tailgate according to Claims 7 and 8, **characterized in that**
- the distance (A) between the second rows of holes (40) of the transverse supporting-profile unit (38) essentially corresponds to the angled distance between the two first rows of holes (36) in the legs of the L-profile.

10. Loading tailgate according to one or more of the preceding claims, **characterized in that**
- the transverse supporting-profile unit (38) comprises two narrow spaced-apart rectangular profiles, and in the region of connection to the bottom flange (29) of the supporting element (28) at least one tension bolt (42), which runs between the rectangular profiles, is guided past the outer edge of the flange, the tension bolt (42) being braced between an outer side of the transverse supporting-profile unit (38) and a clamp (44), and the flange (29) being connected with clamping action between the clamp (44) and the opposite outer side of the transverse supporting-profile unit (38).

11. Loading tailgate according to one or more of Claims 1 to 10, **characterized in that**
- the connection-profile unit and the connection link plate are designed as a single-piece component, that is to say that the connection link plate has integrally formed projecting profiles serving as connection-profile units.

12. Loading tailgate according to one or more of the preceding claims, **characterized in that**
- the connection link plate (34) has lateral angled regions (56), which are provided essentially at right angles to the link-plate plane.

13. Loading tailgate according to Claim 1 and/or 10, **characterized in that**
- the clamp (44) is designed as a rectangular component and a compensating bearing element (54) is arranged between the clamp (44) and transverse supporting-profile unit (38), or the clamp (76) is cross-sectionally designed such that it rests directly on a flange (29) of the supporting element (28) of the vehicle (11) and the top side of the transverse supporting-profile unit (72; 74).

14. Loading tailgate according to Claim 10 and/or 13, **characterized in that**
- the transverse supporting-profile unit (38) passes through beneath the supporting element (28), and provided at least on one side, in particular on both sides, of the flange (29) is [sic] a clamp (44) and a tension bolt (42), by means of which the transverse supporting-profile unit (38) is suspended with clamping action.

15. Loading tailgate according to Claim 10 and/or 13, **characterized in that**
- the underside of the transverse supporting-profile unit (38) is mounted on the top side of the flange (29) and the clamp (44) is arranged on the underside of the flange (29).

16. Loading tailgate according to one or more of Claims 10 to 15, **characterized in that**
- the clamp is designed as a steel component or cast component or extruded profile part.

17. Loading tailgate according to one or more of Claims 1 to 4, **characterized in that**
- the transverse supporting-profile unit (72; 74) is designed as a single-piece profile unit with at least one first undercut groove (78) which runs in the longitudinal direction of the profile and into which at least one form-fitting connection element (82), in particular sliding-block-like bolt-connection element is introduced for connecting the connection-profile unit (32).

18. Loading tailgate according to Claim 17, **characterized in that**
- the transverse supporting-profile unit (72) is connected to the supporting element (28) of the vehicle (11) via at least one encasing connection element (84), which encases the transverse supporting-profile unit (72) in a form-fitting manner at least in certain regions.

19. Loading tailgate according to Claim 18, **characterized in that**
- the encasing connection element (84) is designed as a U-bolt and the transverse supporting-profile unit (72) is designed as a solid-U profile.

20. Loading tailgate according to one or more of Claims 1 to 4, **characterized in that**
- the transverse supporting-profile unit (74) is designed as a single-piece profile unit with at least one second undercut groove (79) which runs in the longitudinal direction of the profile and into which at least one form-fitting connection element (86), in particular sliding-block-like bolt-connection element, is introduced for connection to the supporting element (28) of the vehicle (11).

## Revendications

1. Hayon élévateur (10) pour véhicules (11), comprenant
- une plate-forme (12),
- un dispositif porteur (14, 16, 18, 24) doté d'un mécanisme articulé pivotant pour déplacer la plate-forme (12), qui est notamment situé au-dessous la plate-forme (12), de part et d'autre de celle-ci, sachant que le mécanisme articulé prend appui sur une unité de profilé porteur (24) disposée transversalement par rapport à la direction d'avancement (F), et
- une structure d'assemblage (30) pour relier les deux extrémités de l'unité de profilé porteur (24) à des éléments porteurs (28) présents sur le véhicule (11), notamment des longerons en I (28), sachant que la structure d'assemblage (30) présente chaque fois du côté de l'unité de profilé porteur (24) une bride d'assemblage (34), **caractérisé en ce que**
- au moins une unité de profilé de liaison (32) est reliée à chaque bride d'assemblage (34) ;
- l'unité de profilé de liaison (32) est reliée par sa zone d'extrémité supérieure à une unité de profilé porteur transversal (38 ; 72 ; 74) s'étendant essentiellement transversalement à la direction d'avancement (F),
- l'unité de profilé porteur transversal (38 ; 72 ; 74) est reliée aux éléments de support (28) présents sur le véhicules (11),
- la bride d'assemblage (34) est reliée à l'unité de profilé de liaison (32) et/ou l'unité de profilé de liaison (32) est reliée à l'unité de profilé porteur transversal (38 ; 72 ; 74) de façon à être réglable en hauteur (H),
- et/ou le profilé de liaison (32) est relié au profilé porteur transversal (38 ; 72 ; 74) de façon à être réglable transversalement à la direction d'avancement (F).

2. Hayon élévateur selon la revendication 1, **caractérisé en ce que** l'unité de profilé de liaison (32) présente au moins une première rangée de trous (36) s'étendant dans la direction longitudinale du profilé.

3. Hayon élévateur selon la revendication 1 et/ou 2, **caractérisé en ce que** chaque unité de profilé porteur transversal (38) est assemblée dans sa zone d'extrémité avec une bride inférieure (29) de l'élément porteur (28) en étant immobilisée soit par le bas, soit par le haut, notamment vissée par l'intermédiaire d'une griffe (44 ; 76)

4. Hayon élévateur selon l'une ou plusieurs des revendications précédentes, **caractérisé en ce que** deux unités de profilé de liaison (32) sont reliées à chaque bride d'assemblage (34) en étant espacées l'une de l'autre par rapport à la direction d'avancement (F).

5. Hayon élévateur selon l'une ou plusieurs des revendications précédentes, **caractérisé en ce que** l'unité de profilé porteur transversal (38) présente au moins une seconde rangée de trous (40) qui peut en partie être superposée à la première rangée de trous (36) pour réaliser un assemblage par vis.

6. Hayon élévateur selon la revendication 2 ou 5, **caractérisé en ce que** la première rangée de trous (36) et/ou la seconde rangée de trous (40) est (sont) réalisée(s) en tant que rangée de trous oblongs.

7. Hayon élévateur selon l'une ou plusieurs des revendications précédentes, **caractérisé en ce que** l'unité de profilé de liaison (32) est réalisée en tant que profilé en L avec des premières rangées de trous (36) dans les deux ailes.

8. Hayon élévateur selon l'une ou plusieurs des revendications précédentes, **caractérisé en ce que** l'unité de profilé porteur transversal (38) présente transversalement à la direction d'avancement (F) au moins deux secondes rangées de trous (40).

9. Hayon élévateur selon les revendications 7 et 8, **caractérisé en ce que** l'écart (A) entre les secondes rangées de trous (40) de l'unité de profilé porteur transversal (38) correspond pour l'essentiel à l'écart en angle des deux premières rangées de trous (36) dans les ailes du profilé en L.

10. Hayon élévateur selon l'une ou plusieurs des revendications précédentes, **caractérisé en ce que** l'unité de profilé porteur transversal (38) est composée de deux minces profilés rectangulaires espacés l'un de l'autre, **en ce que**, dans la zone d'assemblage, sur la bride inférieure (29) de l'élément porteur (28), au moins une vis de traction (42) s'étendant entre les profilés rectangulaires passe devant l'arête extérieure de la bride, sachant que la vis de traction (42) est immobilisée entre une face extérieure de l'unité de profilé porteur transversal (38) et une griffe (44) et que la bride (29) est serrée entre la griffe (44) et la face extérieure opposée de l'unité de profilé porteur transversal (38).

11. Hayon élévateur selon l'une ou plusieurs des revendications 1 à 10, **caractérisé en ce que** l'unité de profilé de liaison et la bride d'assemblage sont réalisées d'une seule pièce, ce qui signifie que la bride d'assemblage présente des profilés en console servant d'unités de profilé de liaison.

12. Hayon élévateur selon l'une ou plusieurs des revendications précédentes, **caractérisé en ce que** la bride d'assemblage (34) possède des rebords latéraux (56) qui sont essentiellement perpendiculaires au plan de la bride.

13. Hayon élévateur selon la revendication 1 et/ou 10, **caractérisé en ce que** la griffe (44) est réalisée en tant que pièce rectangulaire et **en ce qu'**une cale (54) est placée entre la griffe (44) et l'unité de profilé porteur transversal (38), ou la griffe (76) présente une section transversale telle qu'elle repose directement sur une bride (29) de l'élément porteur (28) du véhicule (11) et sur le dessus de l'unité de profilé porteur transversal (72 ; 74).

14. Hayon élévateur selon la revendication 10 et/ou 13, **caractérisé en ce que** l'unité de profilé porteur transversal (38) passe sous l'élément porteur (28) et **en ce qu'**une griffe (44) et une vis de traction (42) sont présentes au moins d'un côté, notamment des deux côtés de la bride (29), au moyen desquelles l'unité de profilé porteur transversal (38) est accrochée par serrage.

15. Hayon élévateur selon la revendication 10 et/ou 13, **caractérisé en ce que** le dessous de l'unité de profilé porteur transversal (38) est monté sur le dessus de la bride (29) et **en ce que** la griffe (44) se trouve sur le dessous de la bride (29).

16. Hayon élévateur selon l'une ou plusieurs des revendications 10 à 15, **caractérisé en ce que** la griffe est réalisée en tant que pièce en acier ou pièce venue de fonderie ou pièce extrudée.

17. Hayon élévateur selon l'une ou plusieurs des revendications 1 à 4, **caractérisé en ce que** l'unité de profilé porteur transversal (72 ; 74) est réalisée en tant qu'unité de profilé d'un seul tenant comprenant au moins une première rainure (78) en contre-dépouille s'étendant dans la direction longitudinale du profilé, dans laquelle est introduit, pour assembler l'unité de profilé de liaison (32), au moins un élément d'assemblage par engagement positif (82), notamment un élément à vis en forme de coulisseau.

18. Hayon élévateur selon la revendication 17, **caractérisé en ce que** l'assemblage de l'unité de profilé porteur transversal (72) et de l'élément porteur (28) du véhicule (11) s'effectue par le biais d'au moins un élément de liaison enveloppant (84) qui enveloppe par engagement positif au moins en partie l'unité de profilé porteur transversal (72).

19. Hayon élévateur selon la revendication 18, **caractérisé en ce que** l'élément d'assemblage enveloppant (84) est réalisé en tant que vis en forme de U et l'unité de profilé porteur transversal (72) en tant que profilé plein en U.

20. Hayon élévateur selon l'une ou plusieurs des revendications 1 à 4, **caractérisé en ce que** l'unité de profilé porteur transversal (74) est réalisée en tant que profilé d'un seul tenant comprenant au moins une seconde rainure (79) en contre-dépouille s'étendant dans la direction longitudinale du profilé, dans laquelle est introduit, pour assembler ladite unité de profilé avec l'élément porteur (28) du véhicule (11), au moins un élément d'assemblage par engagement positif (86), notamment un élément à vis en forme de coulisseau.
